# EUROPÄISCHE PATENTSCHRIFT

(11) **EP 0 551 822 B1**
(45) Veröffentlichungstag und Bekanntmachung des Hinweises auf die Patenterteilung: **20.03.1996**
(21) Anmeldenummer: 93100081.4
(22) Anmeldetag: 05.01.1993
(51) Int. Cl.: C08F 6/00, C08F 6/10, B01F 5/06

(54) **Verfahren zur Reinigung von Polymerlösungen**
Process for the purification of polymer solutions
Procédé de purification de solutions de polymères

(30) Priorität: 17.01.1992 DE 4201046
(43) Veröffentlichungstag der Anmeldung: 21.07.1993
(73) Patentinhaber: BAYER AG, D-51368 Leverkusen (DE)
(72) Erfinder: Casper, Clemens, Dr., W-4150 Krefeld (DE); Weinschenck, Jörgen, Dipl.-Ing., W-4150 Krefeld (DE)

(56) Entgegenhaltungen:
- EP-A- 0 451 602
- GB-A- 2 018 781

## Beschreibung

Die Erfindung betrifft ein Verfahren und eine Vorrichtung zur Ausdampfung von Lösungsmitteln und Monomeren aus Polymerlösungen in einem Durchlaufströmungsrohr bei Anwesenheit von Inertgas oder Heißdampf.

Bei der Herstellung von Polymeren fallen in vielen Fällen nach der Reaktion Polymerlösungen an, aus denen das Lösungsmittel und die Monomere weitgehend abgetrennt werden müssen. Dabei wird angestrebt, die Restgehalte dieser Rückstände bis in den ppm-Bereich zu verringern. Da die Polymere selbst keinen oder lediglich einen sehr geringen Dampfdruck besitzen, bietet sich zur Trennung prinzipiell die Verdampfung an. Während eines solchen Verfahrens kommt es jedoch zu einer Viskositätssteigerung von wenigen mPas auf Werte von über 1000 Pas. Durch den Dampfdruckabfall der Substanz zum Prozeßende hin, kommt es zusätzlich zu starken Temperatursteigerungen und damit verbunden zu thermischen Produktschädigungen.

Aus diesen Gründen wird das Trennverfahren im allgemeinen in schweren Vorrichtungen wie Rührkesseln, Extrudern oder Schneckenmischern durchgeführt, mit deren Hilfe es möglich ist, auch hochviskose Stoffe noch so gut zu durchmischen, daß die notwendige Wärme eingetragen wird und die Stoffübertragung in die Dampfphase erfolgen kann. Diese bekannten Apparate sind jedoch in der Anschaffung teuer und verlangen einen hohen Wartungsaufwand.

Weiter sind aus der deutschen Patentschrift DE-C-27 19 968 und der deutschen Offenlegungsschrift DE-A-16 67 051 Verfahren bekannt, bei denen die Trennung der Polymere von Lösungsmitteln und Monomeren in einem einfachen statischen Durchlaufströmungsrohr erfolgt. Dabei wird durch geeignete Wahl der Parameterwerte, wie beispielsweise Drücke und Strömungsgeschwindigkeiten, erreicht, daß sich die Polymerlösung an der Wandung des Strömungsrohres als welliger Film bewegt. Dieses Verhalten wird im Sinne der Erfindung als wellige Filmströmung bezeichnet. Leitet man zusätzlich ein Inertgas oder einen Heißdampf durch das Strömungsrohr, so wird die Konzentration der verdampfbaren Komponenten (Rückstände) und somit auch ihr Partialdruck in der Gasphase reduziert. Mit diesen bekannten Verfahren läßt sich der Restgehalt an verdampfbaren Komponenten im Polymer bis in den ppm-Bereich absenken. Es treten jedoch insbesondere in der Flüssigphase (zum Prozeßende hin) hohe Transportwiderstande auf, die die Stoffübertragung in die Gasphase behindern. Aus diesen Gründen werden große Grenzflächen zwischen beiden Phasen benötigt, was wiederum Vorrichtungen mit langen Rohren und großen Produktverweilzeiten bedingt. Da sich jedoch wie oben beschrieben in dieser Prozessphase die Stofftemperaturen stark erhöhen, kann es zu thermischen Produktschädigungen kommen.

Es bestand daher die Aufgabe, ein Verfahren mit verbesserter Stoffübertragung im Strömungsrohr zu entwickeln.

Die Aufgabe wird dadurch gelöst, daß der sich nach Einleitung der Polymerlösung entlang der Rohrwandung ausbildende Film an mindestens einer Stelle im Strömungsrohr zumindest teilweise wieder von der Rohrwandung getrennt und mit dem Gas vermischt wird.

Die intensive Durchmischung von Gas und Polymerprodukt führt zu verringerten Stofftransportwiderständen und zu einer Vergrößerung der Phasengrenzfläche. Dadurch wird die Stoffübertragung verbessert. Da die Polymerlösung nach der Trennung von der Rohrwand stromabwärts wieder eine wellige Filmströmung ausbildet, kann die Trennung mehrmals wiederholt werden.

Ein Durchlaufströmungsrohr zur Durchführung des neuen Verfahrens ist dadurch gekennzeichnet, daß das Rohr mindestens eine Störstelle zum Ablösen des Filmes von der Rohrwand und zur intensiven Durchmischung der Polymerlösung mit dem Gas aufweist. Die Störstelle ist bevorzugt ein regelbares Drosselventil oder eine Blende, deren der Strömung zugewandte Seite ein im Längsschnitt abgerundetes Profil aufweist. Das Strömungsrohr selbst ist bevorzugt als Wendel- bzw. als Schlangenrohr ausgeführt, um mit Hilfe der bei den Richtungsänderungen auftretenden Kräfte die Stoffübertragung zu verbessern.

Die erfindungsgemäße Vorrichtung besitzt eine Reihe von Vorteilen gegenüber dem einfachen Strömungsrohr:
- die Rohrlänge läßt sich verkürzen;
- die Produktverweilzeit wird kürzer;
- die Konzentrationswerte der Verunreinigungen in der Gasphase liegen näher an den entsprechenden Phasengleichgewichtswerten, was zu niedrigeren Prozeßtemperaturen, schonenderer Produktbehandlung und zur Energieeinsparung führt;
- bei Verwendung eines Drosselventils ergibt sich eine zusätzliche Möglichkeit der Leistungssteuerung durch Wahl unterschiedlicher Ventilstellungen (Androsselung);
- das durch den Vordruck bei der Einspeisung vorgegebene Druckgefälle wird besser ausgenutzt.

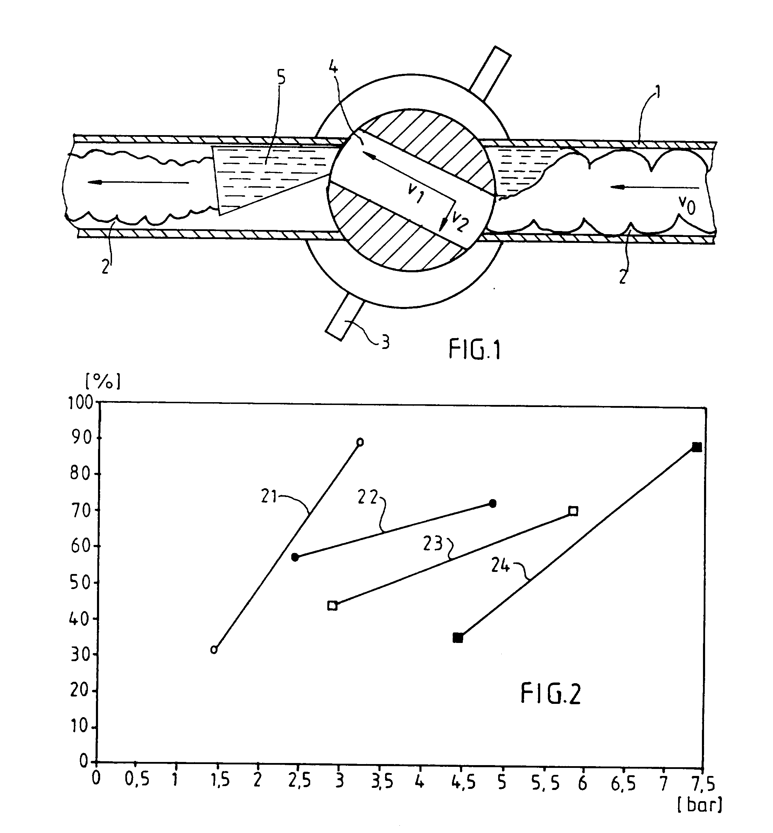

Im folgenden wird die Erfindung anhand der Zeichnung und eines Beispieles näher erläutert. Dabei zeigt Fig. 1 die prinzipielle Wirkweise des neuen Verfahrens und Fig. 2 die verbesserte Wirkung des neuen Verfahrens gegenüber einer bekannten Vorrichtung.

In Fig. 1 wird gezeigt, wie sich im Strömungsrohr 1 die Polymerlösung als welliger Film 2 mit der Geschwindigkeit Vₒ vorwärts bewegt. Trifft diese Filmströmung auf eine Störstelle, die hier durch ein Drosselventil 3 gebildet wird, so teilt sich die Geschwindigkeit Vₒ in eine Komponente in Richtung des Ventilkanals 4 (V₁) und eine Komponente (V₂), die eine Wirbelbewegung der Polymerlösung verursacht. Aufgrund dessen kommt es innerhalb des Ventilkanales bzw. in der Zone 5 unmittelbar hinter der Störstelle zu einer intensiven Vermischung von Polymerlösung und des im Kernbereich des Rohres strömenden Gases. Weiter stromabwärts kommt es dann wieder zur Rückbildung der welligen Filmströmung. Auf diese Weise wird das Strömungsrohr durch die Störstellen in Wärme- und Stoffübertragungsbereiche aufgeteilt.

### Beispiel

Aus einer 15 %igen Silikonöl-Chlorbenzollösung soll das Chlorbenzol weitgehend abgetrennt werden. Das neue Verfahren wurde unter folgenden Betriebsbedingungen durchgeführt:
Produktmenge: 23,5 kg/h
Inertgasmenge (Stickstoff): 7 kg/h
Heizmitteltemperatur: 200°C
Vordruck: 6 bar
Druck im Abscheider am Ende des Strömungsrohres: 1 bar
Rohrdurchmesser (innen): 15 mm
Rohrlänge: 4 m
Störstellen: 2 regelbare Drosselventile

Gegenüber dem ungestörten Strömungsrohr wurde die Restkonzentration des Chlorbenzols von 22 000 ppm auf 17 000 ppm verringert, wobei die im Idealfall erreichbare Gleichgewichtskonzentration 14 000 ppm betrug.

Durch die Störstellen kommt es im Strömungsrohr zu einer Druckerhöhung, deren vorteilhafte Wirkung Fig. 2 belegt. In Abhängigkeit vom Vordruck (Gerade 21: Vordruck 6 bar; Gerade 22: 8 bar; Gerade 23: 10 bar; Gerade 24: 12 bar) zeigt Fig. 2 die prozentuale Verbesserung des Strömungsrohrs mit Störstellen gegenüber einem herkömmlichen Strömungsrohr ohne Störstellen. Die Auftragung erfolgte dabei gegen den Druck im Innern des Strömungsrohrs, bestimmt durch die Druckdifferenz zwischen einem Meßpunkt unmittelbar hinter der Einleitungsdrossel und dem Ende des Strömungsrohres. Durch die als Störstellen eingesetzten Drosselventile läßt sich dieser Druck variieren. Die prozentuale Verbesserung ergibt sich aus der Differenz der Konzentrationen der Rückstände im Polymer (Sumpfkonzentration) zwischen bekanntem und neuem Verfahren. Es wurden weiterhin nicht die Absolutwerte der jeweiligen Konzentration zugrundegelegt, sondern der Abstand zum Gleichgewichtszustand, der unter den Versuchsbedingungen idealerweise erreicht werden kann.

## Patentansprüche

1. Verfahren zur Ausdampfung von Lösungsmitteln und Monomeren aus Polymerlösungen unter Verwendung eines Durchlaufströmungsrohres (1) und unter Zuleitung von Inertgas und/oder Heißdampf, dadurch gekennzeichnet, daß der sich nach Einleitung der Polymerlösung entlang der Rohrwandung des Strömungsrohres ausbildende Film (2) an mindestens einer Stelle im Strömungsrohr (1) zumindest teilweise wieder von der Rohrwand getrennt und mit dem Gas vermischt wird.

2. Vorrichtung zur Durchführung des Verfahrens nach Anspruch 1, dadurch gekennzeichnet, daß das Strömungsrohr (1) mindestens eine Störstelle (3) zum Ablösen des Filmes (2) von der Rohrwand und zur intensiven Durchmischung der Polymerlösung aufweist.

3. Vorrichtung nach Anspruch 2, dadurch gekennzeichnet, daß die Störstelle (3) ein regelbares Drosselventil ist.

4. Vorrichtung nach Anspruch 2, dadurch gekennzeichnet, daß die Störstelle (3) eine Blende ist.

5. Vorrichtung nach einem der Ansprüche 2 bis 4, dadurch gekennzeichnet, daß das Strömungsrohr (1) als Wendel geformt ist.

## Claims

1. A process for stripping solvents and monomers from polymer solutions with the use of a continuous flow tube (1) and with the supply of inert gas and/or superheated steam, characterised in that the film (2) formed along the tube wall of the flow tube after introducing the polymer solution is at least partially separated from the tube wall again at at least one location in the flow tube (1) and is mixed with the gas.

2. An apparatus for carrying out the process according to claim 1, characterised in that the flow tube (1) has at least one disturbance location (3) for detaching the film (2) from the tube wall and for the thorough, intensive mixing of the polymer solution.

3. An apparatus according to claim 2, characterised in that the disturbance location (3) is an adjustable throttle valve.

4. An apparatus according to claim 2, characterised in that the disturbance location (3) is a diaphragm.

5. An apparatus according to any one of claims 2 to 4, characterised in that the flow tube (1) is shaped as a helix.

## Revendications

1. Procédé pour évaporer les solvants et les monomères contenus dans des solutions de polymères par utilisation d'un tube (1) traversé par la matière en écoulement et avec apport d'un gaz inerte et/ou de vapeur d'eau chaude, caractérisé en ce que l'on détache de la paroi du tube, en partie au moins et en au moins un endroit du tube (1) la pellicule (2) qui se forme le long de la paroi du tube traversé par l'écoulement après injection de la solution de polymère et on la mélange avec le gaz.

2. Appareillage pour la mise en oeuvre du procédé selon la revendication 1, caractérisé en ce que le tube d'écoulement (1) contient au moins une perturbation (3) provoquant le décollement de la pellicule (2) de la paroi du tube et un mélange intensif de la solution de polymère.

3. Appareillage selon la revendication 2, caractérisé en ce que la perturbation (3) consiste en une soupape réglable.

4. Appareillage selon la revendication 2, caractérisé en ce que la perturbation (3) consiste en un écran.

5. Appareillage selon une des revendications 2 à 4, caractérisé en ce que le tube d'écoulement (1) est en forme d'hélice.
